Europäisches Patentamt

European Patent Office

Office européen des brevets

(19)

(11) Veröffentlichungsnummer: **0 147 586**
**B1**

# (12) EUROPÄISCHE PATENTSCHRIFT

(45) Veröffentlichungstag der Patentschrift:
07.10.87

(51) Int. Cl.⁴: **F 16 B 5/02**

(21) Anmeldenummer: 84113486.9

(22) Anmeldetag: 08.11.84

(54) **Mindestens zwei über Klemmittel gegeneinander spannbare Teile.**

(30) Priorität: 19.11.83 DE 3341916

(43) Veröffentlichungstag der Anmeldung:
10.07.85 Patentblatt 85/28

(45) Bekanntmachung des Hinweises auf die Patenterteilung:
07.10.87 Patentblatt 87/41

(84) Benannte Vertragsstaaten:
DE FR GB IT

(56) Entgegenhaltungen:
DE - A - 2 749 184
DE - U - 1 550 067
GB - A - 233 429
US - A - 1 348 667

(73) Patentinhaber: DEERE & COMPANY, 1 John Deere Road,
Moline Illinois 61265 (US)

(72) Erfinder: Satzke, Richard, Narzissenweg 10,
D-6834 Ketsch (DE)

(74) Vertreter: Feldmann, Bernhard et al, DEERE &
COMPANY European Office, Patent Department
Steubenstrasse 36-42 Postfach 503,
D-6800 Mannheim 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf mindestens zwei über Klemmittel gegeneinander spannbare Teile, von denen wenigstens einer eine Ausnehmung für einen Bewegungsteil und im Bereich der Angriffsfläche der Klemmittel stoffschlüssig mit einem der Teile verbundene Materialerhebungen aufweist, die auf einer Fläche zwischen zwei Teilen ausserhalb der Projektion des Bewegungsteils auf diese Fläche angeordnet sind.

Bei dieser bekannten Spannung (DE-C-1 550 067) sind zwei Teile ungefähr quaderförmig ausgebildet und stellen ein Ventilgehäuse und eine Ventilgrundplatte eines Ventilgehäusezusammenbaues dar. Auf das Ventilgehäuse ist zusätzlich ein Deckel aufgesetzt, und drei Schrauben erstrecken sich durch jeweils fluchtende Bohrungen in dem Deckel und dem Ventilgehäuse bis in Gewindebohrungen in der Ventilgrundplatte. Das Ventilgehäuse ist mit einer Axialbohrung versehen, die sich mittig und parallel zu den Längsflächen des Ventilgehäuses erstreckt. Die Ventilgrundplatte ist mit verschiedenen Ein- und Ausgangskanälen versehen, die dazu dienen, unter Druck stehende oder drucklose Flüssigkeit zu einem Verbraucher hin oder von diesem weg zu leiten. Die Ein- und Ausgangskanäle werden hierzu über einen in der Axialbohrung verschieblich geführten Schieber entsprechend verbunden, wozu der Schieber in die Axialbohrung eingepasste Ringschultern aufweist. Um zu vermeiden, dass beim Anziehen der Schrauben Kräfte auf das Ventilgehäuse übertragen werden, die dessen Verformung und ein Klemmen des Schiebers zur Folge haben könnten, sind die drei Schrauben so angeordnet, dass sie jeweils die Spitze eines Dreiecks definieren, um eine spannungsfreie Dreipunktauflage zu erreichen. Ferner sind zwischen dem Ventilgehäuse und der Ventilgrundplatte die die Schrauben konzentrisch umgebenden Distanzhalter in Form von ca. 0,79 mm starken Unterlegscheiben oder Materialerhebungen angeordnet, die verhindern sollen, dass sich das Ventilgehäuse und die Ventilgrundplatte auch an Stellen ausserhalb der Distanzhalter noch berühren, weil dadurch die Auflage an nur drei Punkten nicht mehr gewährleistet wäre und Spannungen aufgrund von Unebenheiten an den sich gegenüberliegenden Seiten beider Teile auftreten würden. Zwischen dem Ventilgehäuse und der Ventilgrundplatte sind zudem Dichtungen eingefügt, die einen Flüssigkeitsaustritt aus den Ein- und Ausgangskanälen verhindern und die über die Schrauben an die sich gegenüberliegenden Flächen des Ventilgehäuses und der Ventilgrundplatte angedrückt werden.

Zwar wäre die Verwirklichung einer reinen Dreipunktberührung in der Praxis ein denkbarer Weg, Verspannungen in einem Ventilgehäuse beim Anziehen der Schrauben zu vermeiden; tatsächlich wird dadurch aber nur eine theoretische Annäherung an die ideale Dreipunktberührung erreicht. Ausserdem wird bei grösseren oder komplizierter geformten Ventilgehäusezusammenbauten die Anordnung des Schraubendreiecks so ungünstig, dass die zwischen den Schrauben auf das Ventilgehäuse wirkenden Klemmkräfte nicht mehr ausreichen, um die zwischen das Ventilgehäuse und die Ventilgrundplatte eingebrachten Dichtungen flüssigkeitsdicht anzudrücken. Die Verwendung von mehr als drei Schrauben ist nach dieser Lehre jedoch nicht möglich, da ansonsten die angestrebte Dreipunktberührung aufgegeben wird. Ferner sind die ringförmig um die Schrauben angeordneten Materialerhebungen aufgrund ihrer Abmessungen nur sehr schwer, etwa über ein Feinfräsen, herstellbar. Die ebene, glatte Oberfläche der Materialerhebungen ist zudem nicht geeignet, einer Verschiebung des Ventilgehäuses gegenüber der Ventilgrundplatte entgegenzuwirken. Schliesslich müssen die mit den Materialerhebungen in Berührung kommenden Gegenflächen ebenfalls bearbeitet werden, damit eine ebene Auflage der Materialerhebungen auf den Gegenflächen gewährleistet wird.

Die der Erfindung zugrundeliegende Aufgabe wird darin gesehen, die Verbindung der beiden Teile derart, dass der Teil, der den Bewegungsteil in sich aufnimmt, beim Anziehen der Klemmittel nicht verspannt wird, einfacher und, wenn möglich, noch wirkungsvoller zu gestalten.

Es ist zwar bereits eine andere Art einer verspannungsarmen Verbindung zwischen zwei Teilen bekannt (US-A-1 348 667); dort handelt es sich jedoch um die Verbindung von Flanschen zweier Rohre. Beide Flansche sind an zwei einander zugekehrten Seiten ganzflächig aufgerauht und werden mittels Schrauben gegeneinander gepresst. Die aufgerauhten Flächen sollen sich ineinander keilen, um Dichtungsmittel zum Verhindern des Austritts von in den Rohren gefördertem Medium überflüssig zu machen. Eine sichere Abdichtung im Bereich der Flansche kann aber nur durch eine genügend hohe Schraubenanzugskraft erreicht werden. Dagegen ist eine geringere Schraubenanzugskraft angebracht, wenn zwischen den Flanschen Dichtungsmittel eingebracht werden, die zwar aufgrund der aufgerauhten Flächen einen besseren Halt erlangen, aber auch einen finanziellen Mehraufwand verursachen. Soll die Verbindung nur der blanken Flansche erzielt werden, dann wird der von den Schrauben umschlossene Bereich einer hohen Anpresskraft unterliegen.

Die obengenannte Aufgabe ist nach der Erfindung dadurch gelöst worden, dass die Materialerhebungen durch eine Oberflächenbearbeitung hervorgerufene verformbare Materialspitzen sind, die gleichmässig oder ungefähr gleichmässig auf die Länge der Fläche verteilt und auf lediglich einer der einander zugewandten Flächen der beiden Teile angearbeitet sind.

Auf diese Weise können die als Distanzhalter dienenden Materialerhebungen technologisch einfach an einer ebenen Fläche eines Teiles hergestellt werden, wobei dieser Teil keine eigens hierfür durch aufwendige Verfahren herzustellenden Vorsprünge aufzuweisen braucht. Die Verteilung der Materialerhebungen auf die gesamte Fläche mit Ausnahme eben der projizierten Bewegungsteilfläche lässt die Verwendung von mehr als drei Schrauben zu, so dass den jeweiligen Gegebenheiten bezüglich Form, Anordnung und äusseren Einwirkungen besser Rechnung getragen werden kann. Das Schaffen von Materialerhebungen, insbesondere von Materialspitzen, auf lediglich einer der Flächen führt zudem zu geringeren Fertigungskosten und zu einer zuverlässigeren Bestimmung des Abstands zwischen den verbleibenden Flächenresten, da eine Toleranzenaddition zweier Materialerhebungen ausbleibt. Ferner können beide Teile leichter zueinander positioniert werden, da sie, ohne in Formschluss zu geraten, gegeneinander während der Montage verschoben werden können. Die Lage und Grösse der Materialerhebungen kann dabei abhängig von der Grösse der beiden Teile bestimmt werden und muss nicht noch zusätzlich an eine vorgegebene Lage der Schrauben angepasst werden.

Die Verformbarkeit der Materialerhebungen ermöglicht einen Höhenausgleich in den Bereichen der Angriffsfläche der Klemmittel, und Verspannungen unterbleiben, da die für die Schrauben notwendige Vorspannung allein durch das Verformen der Materialerhebungen und nicht durch das Anliegen an einer relativ unnachgiebigen Fläche erreicht wird. Somit ist bei einem Abweichen von der idealen Dreipunktberührung ein Verspannen des den Bewegungsteil aufnehmenden Teiles zwischen den Angriffsflächen der Klemmittel nicht zu befürchten.

In einfacher, kostengünstiger und auch für die Massenfertigung anwendbarer Weise werden die Materialerhebungen nach einem weiteren Vorschlag gemäss der Erfindung dadurch erzeugt, dass sie durch Rändeln oder Prägen herstellbar sind, wobei sie eine Höhe von 3/100 bis 5/100 mm aufweisen, wodurch eine ausreichende Verspannungsfreiheit bei entsprechend ausgebildeten Flächen der Teile bereits erreicht wird. Insbesondere beim Prägen kann durch die Gestalt des Prägestempels und den auf diesen wirkenden Druck die Form und Höhe der Materialerhebungen bestimmt und an die Grösse der Klemmkräfte angepasst werden. Auf diese Weise ist ein besonders einfaches Verfahren geschaffen worden, mit dem Verspannungen im Bereich der Ausnehmung vermieden werden.

Sind nach einem weiteren Merkmal der Erfindung die Materialspitzen bleibend verformbar, so wird nur beim erstmaligen Anziehen der Klemmittel ein Abplatten der Materialspitzen stattfinden, und zwar abhängig von der Grösse der Klemmkräfte, die gegebenenfalls unter Zuhilfenahme eines Drehmomentschlüssels bestimmbar sind, während nach einer Trennung beider Teile bei einem anschliessenden Zusammenbau in der gleichen Lage die Spannungsfreiheit durch die vorgeformten Sitzflächen, die bei gleichen Klemmkräften sich nicht mehr verändern, erhalten bleibt.

In der Zeichnung ist ein Ausführungsbeispiel der Erfindung dargestellt, das nachfolgend noch näher bschrieben wird. Es zeigt:

Fig. 1 eine Ansicht eines Hydraulikkreislaufes mit einem Ventilgehäusezusammenbau,

Fig. 2 eine Ansicht einer Unterseite eines Ventilgehäuses,

Fig. 3 einen Detailschnitt im Bereich des Kreises 3 in Fig. 1,

Fig. 4 einen Detailschnitt im Bereich des Kreises 4 in Fig. 1.

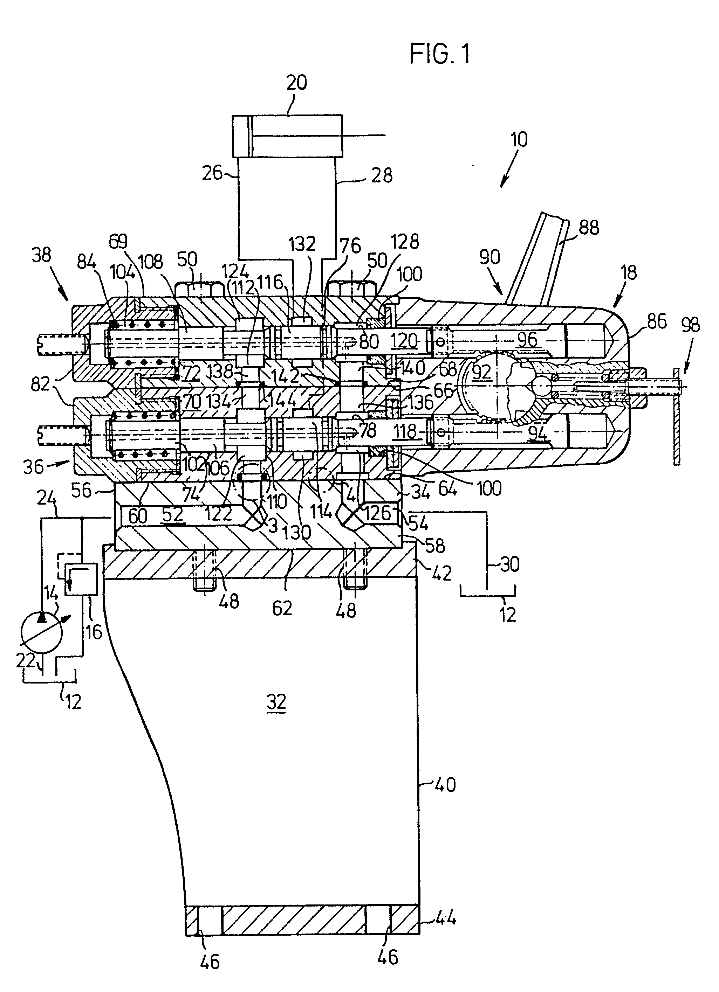

Ein in Fig. 1 dargestellter Hydraulikkreislauf 10 besteht aus einem Vorratsbehälter 12, einer Pumpe 14, einem Druckbegrenzungsventil 16, einem Ventilgehäusezusammenbau 18, einem Verbraucher 20 und entsprechenden Leitungen. Dabei erstreckt sich eine Saugleitung 22 zwischen der Pumpe 14 und dem Vorratsbehälter 12, eine Druckleitung 24 zwischen der Pumpe 14 und dem Ventilgehäusezusammenbau 18, eine erste und eine zweite Verbraucherleitung 26 und 28 zwischen dem Ventilgehäusezusammenbau 18 und dem Verbraucher 20 und eine Abflussleitung 30 zwischen dem Ventilgehäusezusammenbau 18 und dem Vorratsbehälter 12. Die Pumpe 14 ist in diesem Ausführungsbeispiel als Pumpe mit variablem Verdrängungsvolumen ausgebildet, und der Verbraucher 20 ist als doppelseitig beaufschlagbarer Hydraulikzylinder ausgeführt, dem kolbenseitig oder kolbenstangenseitig von der Pumpe 14 geförderte Druckflüssigkeit zuführbar ist, wie dies noch erläutert werden wird.

Der Ventilgehäusezusammenbau 18 wird im wesentlichen aus einem Gestell 32 und drei Teilen, nämlich einer Grundplatte 34, einem unteren und einem oberen Ventilgehäuse 36 und 38, gebildet, wobei der Zusammenbau in der gleichen Reihenfolge vorgenommen wird. Das Gestell 32 ist U-förmig mit einem Steg 40 und zwei Schenkeln 42, 44 gefertigt und so an eine nicht gezeichnete Hydraulikanlage, wie sie etwa bei einem Ackerschlepper zu finden ist, angeschlossen, dass der Steg 40 senkrecht zu stehen kommt. In dem unteren Schenkel 44 sind Bohrungen 46 zur Aufnahme nicht gezeigter Schrauben, die in ebenfalls nicht gezeigte Gewindebohrungen an dem Ackerschlepper eingesetzt werden, vorgesehen, während in dem oberen Schenkel 42 Gewindebohrungen 48 eingebracht sind, in die sich durch den Ventilgehäusezusammenbau 18 erstreckende Klemmittel in Form von Schrauben 50 einschraubbar sind. Auf den oberen Schenkel 42 ist die Grundplatte 34 aufgesetzt. Diese ist mit einem einenends an die Druckleitung 24 angeschlossenen Druckkanal 52 und einem einenends mit der Abflussleitung 30 verbundenen Abflusskanal 54 versehen, wobei die Anschlüsse über handelsübliche Verschraubungen, die der Einfachheit wegen weggelassen wurden, erfolgen. Durch die Grundplatte 34 hindurch erstrecken sich nicht sichtbare Bohrungen zur Aufnahme der Schrauben 50. Im übrigen ist die Grundplatte 34 quaderförmig gestaltet, an deren kurzen Stirnseiten 56 und 58 die Druckleitung 24 bzw. die Abflussleitung 30 eintreten, an deren Oberseite 60 der Druck- bzw. der Abflusskanal 52 bzw. 54 austreten und zwischen deren Ober- und Unterseite 60 und 62 sich die Bohrungen zur Aufnahme der Schrauben 50 erstrekken. An die Oberseite 60 schliesst die Unterseite 64 des unteren Ventilgehäuses 36 und an dessen Oberseite 66 die Unterseite 68 des oberen Ventilgehäuses 38 an. Die Oberseite 69 des oberen Ventilgehäuses 38 liegt frei. Das obere wie auch das untere Ventilgehäuse 38 und 36 weisen einen ebenfalls quaderförmigen Mittelteil 70, 72 auf, durch den sich senkrecht zu den jeweiligen Ober- und Unterseiten 66, 69 und 68, 64 der Aufnahme der Schrauben 50 dienende Bohrungen 51 erstrecken. Die Bohrungen 51 sind am Rand der Längsseiten der Mittelteile 70, 72 angebracht, wobei in diesem Ausführungsbeispiel an jeder Längsseite zwei Bohrungen vorgesehen sind. Parallel zu den ober- bzw. Unterseiten 66 bzw. 64, 68 ist jeweils eine Axialbohrung 74, 76 eingebracht, die in sich je einen Schieber 78 und 80 aufnehmen. Die Axialbohrung 74, 76 verläuft jeweils konzentrisch zu der Längsmittelachse des Mittelteiles 70, 72. Einenends der Schieber 78, 80 ist an den Mittelteil 70 und 72 jeweils eine Endkappe 82 mit einem Rückstellmechanismus 84, der den Schieber 78 stets in eine Neutralstellung zurückführt, und anderenends eine dem oberen und dem unteren Ventilgehäuse 38 und 36 gemeinsame Kappe 86 angeflanscht. In der gemeinsamen Kappe 86 ist eine durch einen Hebel 88 betätigbare Verstelleinrichtung 90 angeordnet, die aus einem drehbaren Ritzel 92 und mit diesem in Verbindung stehenden verzahnten Endstücken 94, 96 der Schieber 78, 80 besteht, wobei das Ritzel 92 durch einen Arretiermechanismus 98 in verschiedenen Stellungen gehalten werden kann. Das Ritzel 92 greift an diagonal gegenüberliegenden Stellen in die verzahnten Endstücke 94, 96 ein und bewirkt bei seiner Drehung durch den Hebel 88, dass die Schieber 78, 80 gegensätzlich verschoben werden. Die Schieber 78 und 80 sind derart ausgebildet, dass sie einenends bis in die zugehörige Endkappe 82 ragen und dort von dem Rückstellmechanismus 84 umgriffen werden und anderenends mit ihren verzahnten Endstücken 94, 96 sich in die Kappe 86 bis zu deren Wandung erstrecken. Während die Endkappen 82 flüssigkeitsdicht angeflanscht sind, sind die Schieber 78 und 80 an dem Übergang des Mittelteils 70, 72 zu der Kappe 86 von je einer Dichtung 100 umgeben. Jeder Schieber 78 und 80 weist ein mit dem Rückstellmechanismus 84 in Eingriff stehendes Ende 102, 104, eine sich an dieses anschliessende Ringschulter 106, 108, eine Druckringnut 110, 112, eine Steuerringschulter 114, 116 und ein Schaftteil 118, 120 mit einem gegenüber der Steuerringschulter 114, 116 geringeren Durchmesser auf, der an das verzahnte Endstück 94, 96 anschliesst. Jede Axialbohrung 74 und 76 besitzt jeweils voneinander getrennt eine Druckringkammer 122, 124, eine Abflussringkammer 126, 128 und eine Verbraucherringkammer 130, 132, wobei die Verbraucherringkammer 132 des oberen Ventilgehäuses 38 mit der ersten Verbraucherleitung 26 und die Verbraucherringkammer 130 des unteren Ventilgehäuses 36 mit der zweiten Verbraucherleitung 28 in Verbindung steht. Die Druckringkammer 122 des unteren Ventilgehäuses 36 wird von einer Einlassbohrung 134 und die Abflussringkammer 126 von einer Auslassbohrung 136 geschnitten, wobei die Einlassbohrung 134 zu dem Druckkanal 52 und die Auslassbohrung 136 zu dem Abflusskanal 54 führt. Das obere Ventilgehäuse 38 enthält eine zu seiner Druckringkammer 124 führende Einlasssackbohrung 138 und eine von der Abflussringkammer 128 fortführende Auslasssackbohrung 40. An der Anlagefläche der Unterseite 68 des oberen Ventilgehäuses 38 mit der Oberseite 66 des unteren Ventilgehäuses 36 treffen die Einlassbohrung 134 und die Einlasssackbohrung 138 sowie die Auslassbohrung 136 und die Auslasssackbohrung 140 aufeinander. Hierzu ist an den Unterseiten 64, 68 der Ventilgehäuse 36, 38 jeweils eine die Einlass- und Auslassbohrung 134, 136 bzw. die Einlass- und die Auslasssackbohrung 138, 140 erweiternde Stufe 142 eingefräst, die in sich je einen Dichtungsring 144 aufnehmen, die beim Zusammenbau des Ventilgehäusezusammenbaus 18 durch das Festziehen der Schrauben 50 so zwischen den jeweiligen Ober- und Unterseiten 60, 66 und 64, 68 eingeklemmt werden, dass in diesem Bereich ein flüssigkeitsdichter Übergang entsteht.

Die Schieber 78 und 80 können abhängig voneinander drei verschiedene Stellungen, nämlich eine Zuflussstellung, eine Neutralstellung und eine Abflussstellung, einnehmen, wobei bedingt durch ein gegensätzliches Verstellen der Schieber 78 und 80 mittels des Ritzels 92 der eine Schieber 78 oder 80 seine Zuflussstellung einnimmt, wenn der andere Schieber 80 oder 78 sich in seiner Abflussstellung befindet und umgekehrt und beide gemeinsam ihre Neutralstellung einnehmen. In der Neutralstellung nehmen die Schieber 78 und 80 eine Stellung ein, in der ihre Steuerringschultern 114, 116 einen Flüssigkeitsfluss in oder aus der Verbraucherringkammer 130, 132 unterbinden. Um die Zuflussstellung einnehmen zu können, wird der jeweilige Schieber 78, 80 über das Ritzel 92 so weit verschoben, dass die Steuerringschulter 114, 116 eine Verbindung zwischen der Verbraucherringkammer 130, 132 und der Druckringkammer 122, 124 ermöglicht, und in der Abflussstellung wird der jeweilige Schieber 78, 80 so weit verschoben, dass eine Verbindung der Verbraucherringkammer 130, 132 mit der Abflussringkammer 126, 128 entsteht. Die jeweiligen Stellungen werden also lediglich durch das Verschieben der Schieber 78, 80 erreicht, wozu diese leichtgängig und flüssigkeitsdicht in die zugehörige Axialbohrung 74, 76 eingesetzt sind. Die Dichtigkeit der Schieber 78 und 80 in den Axialbohrungen 74, 76 wird durch eine entsprechende Toleranzauswahl erreicht, die dafür sorgt, dass keine ungewollten Flüssigkeitsflüsse zwischen der Druck-, der Verbraucher- und der Abflussringkammer 122 bis 132 stattfinden.

Soll entsprechend dem Vorbeschriebenen der Verbraucher 20 kolbenseitig mit Druckflüssigkeit beaufschlagt werden, dann wird der Schieber 80 des oberen Ventilgehäuses 38 in seine Zuflussstellung und der Schieber 78 des unteren Ventilgehäuses 36 in seine Abflussstellung gebracht, so dass die Druckflüssigkeit ihren Weg von der Pumpe 14 durch die Druckleitung 24 in den Druckkanal 52, durch die Einlassbohrung 134, die Druckringkammer 122, die Einlasssackbohrung 138, die Druckringkammer des oberen Ventilgehäuses 124, die Druckringnut 112, die Verbraucherringkammer 132 und die erste Verbraucherleitung 26 zu dem kolbenseitigen Ende des Verbrauchers 20 hin nimmt. Der Abfluss der kolbenstangenseitig aus dem Verbraucher 20 austretenden Flüssigkeit erfolgt dann über die zweite Verbraucherleitung 28, die Verbraucherringkammer 130 des unteren Ventilgehäuses 36, an dem Schaftteil 118 vorbei zur Auslassbohrung 136, den Abflusskanal 54 und die Abflussleitung 30 zum Vorratsbehälter 12. Die Druckbeaufschlagung des kolbenstangenseitigen Endes des Verbrauchers 20 erfolgt hierzu analog.

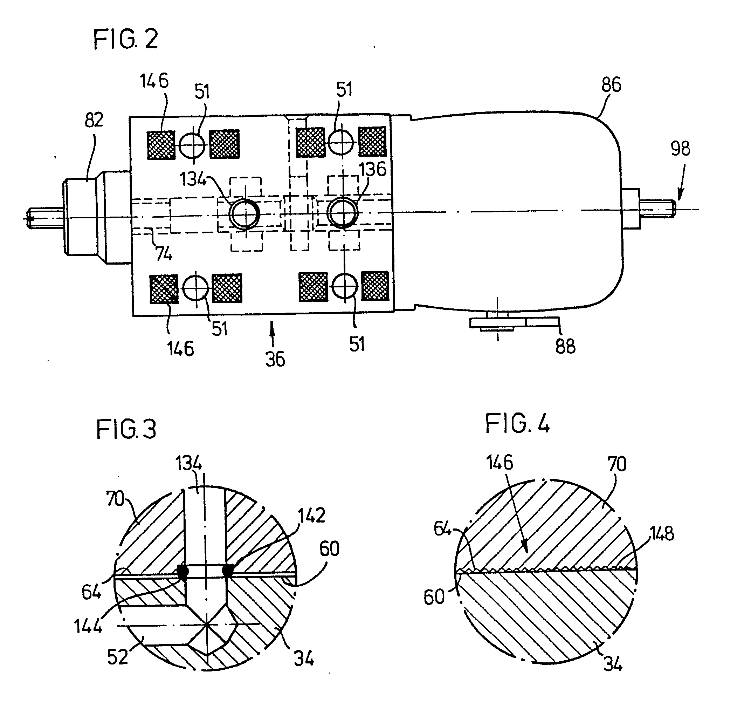

Wie Fig. 2 zeigt, ist die Unterseite 64 des unteren Ventilgehäuses 36 stellenweise bearbeitet, und zwar durch Rändeln oder Prägen aufgerauht. Dies kann auch auf die Unterseite 68 des oberen Ventilgehäuses 38 zutreffen, obwohl es nicht ersichtlich ist. Diese Stellen, die im folgenden als Kontaktflächen 146 bezeichnet werden, sind parallel zu der Längsmittelachse der Axialbohrung 74 und jeweils seitlich von ihr verlaufend vorgesehen. Sie sind in jeweils einer Linie liegend ungefähr gleichmässig auf die Länge der Unterseite 64 des Mittelteils 70 verteilt. In diesem Ausführungsbeispiel sind auf jeder Seite des Schiebers 78 auf der Unterseite 64 vier Kontaktflächen 146 angebracht, und zwar so, dass jeweils zwei einer Bohrung 51 für die Schrauben benachbart sind. Die Oberflächenrauhigkeit beträgt an den Kontaktflächen ca. 3/100 bis 5/100 mm, d.h. in diesen Bereichen befinden sich Materialstauchungen in der Gestalt von Materialspitzen 148 von ungefähr dieser Höhe. Die Form der Kontaktflächen 146 ist beliebig; sie sollte jedoch bei allen Kontaktflächen gleich sein. Die noch verbleibende Fläche der Unterseiten 64, 68 ist entweder blankgezogen oder grobgeschliffen, so dass sich dort eine Oberflächenrauhigkeit von weniger als 3/100 mm ergibt. Ein Feinschleifen, Polieren oder Finishen ist nicht erforderlich. Bei der Anordnung der Kontaktflächen 146 ist darauf zu achten, dass diese sich nicht im Bereich der projizierten Fläche des Schiebers 78, 80 auf die Unterseite 64, 68 befinden.

Zur Montage des Ventilgehäusezusammenbaues 18 werden die jeweils zusammengehörenden Ober- und Unterseiten 60, 66 und 64, 68 des Gestells 32, der Grundplatte 34, des unteren und des oberen Ventilgehäuses 36 und 38 aufeinandergelegt, wobei zwischen die Grundplatte 34 und das untere Ventilgehäuse 36 sowie zwischen das untere und das obere Ventilgehäuse 36 und 38 wie zuvor beschrieben die Dichtungsringe 144 in die Stufen 142 einzulegen sind. Anschliessend werden die Schrauben 50 durch die Bohrungen 51 geführt und in die Gewindebohrungen 48 eingedreht, bis der gesamte Ventilgehäusezusammenbau 18 fixiert und in sich vorgespannt ist. Um eine für den Betrieb des Ventilgehäusezusammenbaues 18 ausreichende Festigkeit zu erreichen, werden die Schrauben 50, gegebenenfalls unter Zuhilfenahme eines Drehmomentschlüssels, weiter angezogen, so dass die an den Kontaktflächen 146 aufgebauten Materialspitzen 148 plattgedrückt werden und somit durch ihren Verformungswiderstand eine ausreichende Spannung der Schrauben 50 und somit des Ventilgehäusezusammenbaues 18 und eine ausreichende Festigkeit des Ventilgehäusezusammenbaues 18 erzeugen. Die notwendige Schraubenspannung wird dabei bereits erreicht, bevor sich die jeweils sich gegenüberliegenden Ober- und Unterseiten 60, 66 und 62, 64 an ihren nicht aufgerauhten Stellen berühren. Da die Materialspitzen 148 höher als eventuell vorhandene Unebenheiten auf den Ober- und/oder Unterseiten 60, 66 und/oder 62, 64 sind und eine ausreichende Festigkeit des Ventilgehäusezusammenbaues 18 bereits erreicht ist, bevor diese zur Anlage kommen können, tritt keine Verformung der Ventilgehäuse 36, 38 und insbesondere der Mittelteile 70, 72 ein, die zu einer Verspannung des Mittelteils 36, 38 im Bereich des Schiebers 78, 80 und der diesen umgebenden Axialbohrung 74, 76 führen können. Die Spannungsfreiheit im Bereich des Schiebers 78, 80 gewährleistet, dass er leichtgängig in der Axialbohrung 74, 76 verschoben werden kann. Je nach der Gestalt und dem Material der Materialspitzen 148 können diese elastisch oder bleibend verformbar sein.

Die Fig. 3 und 4 veranschaulichen, wie die Verbindung der Ober- und Unterseite 60 und 64 einmal im Bereich des Dichtungsringes 144 und einmal im Bereich der Kontaktflächen 146 aussieht.

Dabei zeigt Fig. 3, dass der Dichtungsring 144 sowohl an der Unterseite 64 wie auch an der Oberseite 60 anliegt, während diese noch einen geringen Abstand zueinander aufweisen. Der Dichtungsring 144 übt jedoch bereits seine dichtende Funktion aus. In Fig. 4 dagegen liegen die Oberseite 60 und die Unterseite 64 an den Materialspitzen 148 aneinander an.

Die Angaben der zulässigen Rauhigkeit von 3/100 bis 5/100 mm gilt nicht generell, sondern sie ist auf dieses Ausführungsbeispiel abgestimmt, da die Ober- und Unterseiten 60, 66, 69 und 62, 64, 68 relativ plan hergestellt werden müssen, um einen einwandfreien Sitz der Kappe 86 und eine gute Funktion der Verstelleinrichtung zu gewährleisten. In anderen Anwendungsfällen kann die Oberflächenrauhigkeit grösser oder kleiner sein; sie muss aber stets grösser sein als die grösste Unebenheit der sich gegenüberliegenden Flächen.

Weitere Anwendungsfälle sind bei jeder Verbindung mindestens zweier Teile, die flächenhaft ohne irgendwelche Zwischenlagen gegeneinander zur Anlage kommen könnten. Beispielhaft sei der Aufbau einer Steuerplatte mit elektrischen oder hydraulischen Steuerelementen auf ein Gestell genannt, wobei kein Verzug in der Steuerplatte auftreten darf, um Fehlschaltungen zu vermeiden. Eine derartige Oberflächenbearbeitung wäre auch geeignet, um ein hochgenaues Gleitlager, wie es bei Turbolatoren angewendet wird, verspannungsfrei einzubauen. Ein weiteres Beispiel der Anwendung ergibt sich beim Aufbau von Trägern für Keramik, Glasisolatoren oder Schneidgeräten aus dem gleichen Werkstoff.

**Patentansprüche**

1. Mindestens zwei über Klemmittel (50) gegeneinander spannbare Teile (34, 36, 38), von denen wenigstens einer eine Ausnehmung (74, 76) für einen Bewegungsteil (78, 80) und im Bereich der Angriffsfläche der Klemmittel (50) stoffschlüssig mit einem der Teile (34, 36, 38) verbundene Materialerhebungen (148) aufweist, die auf einer Fläche (64, 68) zwischen zwei Teilen (34, 36, 38) ausserhalb der Projektion des Bewegungsteils auf diese Fläche angeordnet sind, dadurch gekennzeichnet, dass die Materialerhebungen (148) durch eine Oberflächenbearbeitung hervorgerufene verformbare Materialspitzen (148) sind, die gleichmässig oder ungefähr gleichmässig auf die Länge der Fläche (64, 68) verteilt und auf lediglich einer der einander zugewandten Flächen (64, 68) der beiden Teile (34, 36, 38) angearbeitet sind.

2. Mindestens zwei über Klemmittel gegeneinander spannbare Teile (34, 36, 38) nach Anspruch 1, dadurch gekennzeichnet, dass die Materialspitzen (148) durch Rändeln oder Prägen herstellbar sind und eine Höhe von 3/100 bis 5/100 mm aufweisen.

3. Mindestens zwei über Klemmittel gegeneinander spannbare Teile (34, 36, 38) nach Anspruch 1, dadurch gekennzeichnet, dass die Materialspitzen (148) bleibend verformbar sind.

## Claims

1. At least two portions (34, 36, 38) which can be braced against each other by way of clamping means (50) and of which at least one has an opening (74, 76) for a motion member (78, 80) and in the region of the engagement surface of the clamping means (50) has material raised portions (148) connected to one of the portions (34, 36, 38) in the material thereof, which raised portions (148) are arranged on a surface (64, 68) between two portions (34, 36, 38) outside the projection of the motion member on to said surface, characterised in that the material raised portions (148) are deformable material points (148) which are caused by a surface machining and which are distributed uniformly or approximately uniformly over the length of the surface (64, 68) and which are provided on only one of the mutually facing surfaces (64, 68) of the two portions (34, 36, 38).

2. At least two portion (34, 36, 38) which can be braced against each other by way of clamping means, according to claim 1, characterised in that the material points (148) can be produced by milling or impressing and are from 3/100 to 5/100 mm in height.

3. At least two portions (34, 36, 38) which can be braced against each other by way of clamping means, according to claim 1, characterised in that the material points (148) are permanently deformable.

## Revendications

1. Composants au nombre d'au moins deux (34, 36, 38) pouvant être serrés l'un contre l'autre à l'aide de moyens de blocage (50), dont l'un au moins comporte un évidement (74, 76) pour une pièce mobile (78, 80) et comporte, dans la zone de la surface d'application des moyens de blocage (50), des bosses de matière (148) reliées avec concordance de matières à l'un des composants (34, 36, 38), qui sont placées sur une surface (64, 68) entre deux composants (34, 36, 38) en dehors de la projection de la pièce mobile sur cette surface, caractérisés en ce que les bosses de matière (148) sont des pointes de matière (148) déformables, produites par un usinage superficiel, qui sont réparties uniformément ou sensiblement uniformément sur la longueur de la surface (64, 68) et sont formées par usinage sur une seule des surfaces en regard (64, 68) des deux composants (34, 36, 38).

2. Composants au nombre d'au moins deux (34, 36, 38) pouvant être serrés l'un contre l'autre à l'aide de moyens de blocage selon la revendication 1, caractérisés en ce que les pointes de matière (148) peuvent être produites par moletage ou matriçage et présentent une hauteur de 3/100 à 5/100 mm.

3. Composants au nombre d'au moins deux (34, 36, 38) pouvant être serrés l'un contre l'autre selon la revendication 1, caractérisés en ce que les pointes de matière (148) peuvent subir une déformation permanente.

FIG. 1

FIG. 2

FIG. 3

FIG. 4